# EUROPÄISCHE PATENTSCHRIFT

(11) **EP 2 671 426 B1**
(45) Veröffentlichungstag und Bekanntmachung des Hinweises auf die Patenterteilung: **18.03.2015**
(21) Anmeldenummer: 12703046.8
(22) Anmeldetag: 31.01.2012
(51) Int. Cl.: H05B 7/152

(54) **VORRICHTUNG ZUR REGULIERUNG DER ELEKTRODE EINES ELEKTRO-REDUKTIONSOFENS**
DEVICE FOR CONTROLLING THE ELECTRODE OF AN ELECTRIC ARC REDUCTION FURNACE
DISPOSITIF DE RÉGLAGE DE L'ÉLECTRODE D'UN FOUR ÉLECTRIQUE À RÉDUCTION

(30) Priorität: 01.02.2011 DE 102011003468
(43) Veröffentlichungstag der Anmeldung: 11.12.2013
(73) Patentinhaber: SMS Siemag AG, 40237 Düsseldorf (DE)
(72) Erfinder: KÖNIG, Roland, 45472 Mülheim a. d. Ruhr (DE); ROSE, Lutz, 47259 Duisburg (DE); STRIEDER, Detlef, 47239 Duisburg (DE); KLEIER, Tim, 42781 Haan (DE)
(74) Vertreter: Klüppel, Walter
(86) Internationale Anmeldenummer: PCT/EP2012/051610
(87) Internationale Veröffentlichungsnummer: WO 2012/104323

(56) Entgegenhaltungen:
- CN-U- 201 550 313
- FR-A- 707 595
- SU-A1- 864 598
- US-A- 1 528 510
- US-A- 3 042 731

## Beschreibung

Die Erfindung betrifft eine Vorrichtung zur Regulierung der Elektrode eines Elektro-Reduktionsofens nach dem Oberbegriff des Anspruchs 1.

Die DE 1 083 952 und die US 3 042 731 A beschreiben eine Regelanordnung für Elektroden von Reduktionsöfen ohne Gegengewichte, bei der die Elektrode an einem Tragseil gehalten ist, welches mit einem Antriebsmotor In Verbindung steht.

Weiterhin ist es in den letzten Jahren bekannt, große Elektroden in Reduktionsöfen zu verwenden, wobei die Halterung und Bewegung der großen Elektroden mittels hydraulischer Zylinder erfolgt, um die großen Gewichte ausreichend schnell und sicher zu bewegen.

Es ist die Aufgabe der Erfindung, eine Vorrichtung zur Regulierung der Elektrode eines Elektro-Reduktionsofens anzugeben, die auf einfache Weise eine schnelle und sichere Bewegung der Elektroden ermöglicht.

Diese Aufgabe wird für eine eingangs genannte Vorrichtung erfindungsgemäß mit den kennzeichnenden Merkmalen des Anspruchs 1 gelöst. Durch die Veränderbarkeit der Masse des Gegengewichts kann bei Bedarf eine Anpassung an das Gewicht der Elektrode erfolgen, so dass eine resultierende, auf den Elektromotor wirkende Gesamtkraft einstellbar und nachregelbar ist. Dies ermöglicht eine besonders effektive Regelung der Elektrodenhöhe, auch im Fall besonders großer und schwerer Elektroden.

Durch die Erfindung wird daher insbesondere die Möglichkeit geschaffen, auch große und schwere Elektroden mittels eines angetriebenen Tragseils zu verfahren, so dass auf hydraulische Zylinder für die Elektrodenanhebung verzichtet werden kann.

Bei einer bevorzugten Weiterbildung der Erfindung ist es vorgesehen, dass die Masse des Gegengewichts durch ein strömungsfähiges Gewichtsgut, bevorzugt eine Flüssigkeit, veränderbar ist. Hierdurch ist eine insbesondere automatisierte und genaue Anpassung des Gegengewichts ermöglicht. Bei der Flüssigkeit kann es sich auf einfache Weise um Wasser handeln. Es kann sich in alternativer Gestaltung aber auch um ein nicht flüssiges, zum Beispiel rieselfähiges, Gewichtsgut handeln, wie etwa Sand, Metallgriess oder Ähnliches.

Bei einer besonders bevorzugten Weiterbildung ist dabei das Gegengewicht über eine bevorzugt automatische Kupplung an eine Befüllungseinrichtung für das Gewichtsgut lösbar anschließbar. So kann eine weitere Automatisierung der Massenänderung des Gegengewichtes erfolgen. Eine Ankopplung kann zum Beispiel in einer oberen Position der Elektrode erfolgen, in der insbesondere kein Strom durch die Elektrode fließt. Alternativ kann eine Änderung des Gegengewichts auch während eines Betriebs der Elektrode vorgesehen sein.

Bei einer möglichen Ausführungsform der Erfindung ist die Elektrode als selbsttragende Massivelektrode aus Kohlenstoff mit einem Durchmesser von mehr als 0,4 m, insbesondere mehr als 0,6 m, ausgebildet. Für Elektroden eines solchen Durchmessers und entsprechenden Gewichts wird durch die erfindungsgemäßen Merkmale eine Kombination mit einer Halterung durch ein Tragseil ermöglicht. Bei einer alternativen Ausgestaltung ist die Elektrode mit gleicher Zielsetzung als Söderberg-Elektrode mit einem Durchmesser von mehr 0,7 m, insbesondere mehr als 1,0 m, ausgebildet.

Allgemein vorteilhaft beträgt ein maximaler Verfahrhub der Elektrode mittels des Tragseils mehr als 10 m, insbesondere mehr als 12 m. Durch die erfindungsgemäße Halterung der Elektrode wird ein solch großer Hub kostengünstig und auf einfache Weise ermöglicht.

Besonders bevorzugt ist es bei einer erfindungsgemäßen Vorrichtung vorgesehen, dass ein Deckelherz des Reduktionsofens bei einer oberen Verfahrposition der am Tragseil gehaltenen Elektrode auswechselbar ist. Eine solche regelmäßige Auswechselung ist insbesondere bei Reduktionsöfen der Bauart DC-SAF vorgesehen und durch die erfindungsmäße Elektrodenhalterung gut realisierbar.

Allgemein vorteilhaft ist der Elektromotor mittels einer rechnergestützten Steuerung ansteuerbar, um ein Nachführen der Elektrode im Betrieb des Reduktionsofen zu optimieren..

Bei einer bevorzugten Detailgestaltung ist es vorgesehen, dass die Elektrode mittels zumindest zwei Tragseilen mit jeweils einem Gegengewicht gehalten ist. Hierdurch können die einzelnen Tragseile kleiner ausgelegt werden und es wird eine zusätzliche Betriebsicherheit ermöglicht.

Zur weiteren Automatisierung ist es vorgesehen, dass das Tragseil über zumindest eine Wiegezelle geführt ist, um eine Gewichtsbelastung durch die Elektrode zu messen.-Hierdurch kann nicht nur eine optimale Anpassung des Gegengewichts erreicht werden, sondern zudem eine Abnutzung der Elektrode während des Betriebs engmaschig kontrolliert werden.

Allgemein vorteilhaft ist das Gegengewicht so eingestellt, dass eine resultierende Kraft in Aufwärtsrichtung auf die Elektrode wirkt. Hierdurch kann die Elektrode im Fall eines Stromausfalls nicht in die Schmelze fallen bzw. kann durch die Schwerkraft selbstständig in eine obere Position verfahren.

Weitere Vorteile und Merkmale der Erfindung ergeben sich aus dem nachfolgend beschriebenen Ausführungsbeispiel sowie aus den abhängigen Ansprüchen. Nachfolgend wird ein bevorzugtes Ausführungsbeispiel der erfindungsgemäßen Vorrichtung beschrieben und anhand der anliegenden Zeichnungen näher erläutert.
- Fig. 1: zeigt eine teilweise geschnittene Gesamtansicht einer erfindungsgemäßen Vorrichtung in einer untersten Arbeitsposition einer Elektrode.
- Fig. 2: zeigt die Vorrichtung aus Fig. 1 in einer obersten Arbeitsposition der Elektrode.
- Fig. 3: zeigt die Vorrichtung aus Fig. 1 in einer maximal oberen Position der Elektrode.

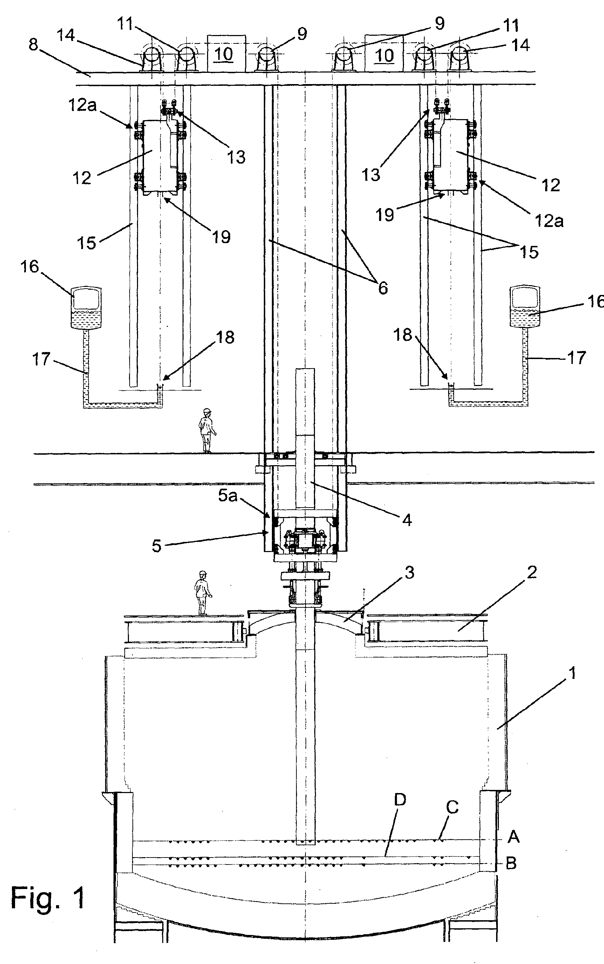

Die in Fig. 1 gezeigte Vorrichtung stellt insgesamt einen DC-SAF (DC = Gleichstrom, SAF = Submerged Arc Furnace) dar. Bei dieser Bauart von Elektro-Reduktionsöfen taucht die Elektrode zumindest teilweise in die auf der Metallschmelze schwimmende Schlacke ein.

Der Reduktionsofen umfasst hat ein Gefäß 1 mit einem Deckel 2, in dem ein auswechselbares Deckelherz 3 angeordnet ist. Das Deckelherz 3 hat eine zentrale Öffnung 3a, die von einer Elektrode 4, vorliegend einer massiven Graphit-Elektrode mit einem Durchmesser von 0,75 m, durchgriffen wird.

Die Elektrode 4 ist in einem Halteglied 5 festgelegt, das oberhalb des Deckels 2 zwischen ortfesten, senkrechten Führungen 6 geführt ist. Hierzu hat das Halteglied 5 seitliche, gegen die Führungen 6 wirkende Stützrollen 5a.

Das die Elektrode aufnehmende Halteglied 5 ist über vorliegend zwei Tragseile 7 in der senkrechten bzw. Schwerkraftrichtung gehalten. Die Tragseile können je nach Anforderungen aus Stahlselen, Stahlbändern oder einem anderen Material sein, zum Beispiel Polyurethan-Gurte.

Die Tragseile führen nach oben zu einer Bühne 8, wo sie jeweils in einer ersten Umlenkrolle 9 aufgenommen sind und um 90° umgelenkt werden. Nachfolgend durchlaufen die Tragseile 7 jeweils ein Antriebsglied 10 mit einem Elektromotor, der elektronisch über einen Rechner gesteuert ist. Nach dem Antriebsglied 10 folgt eine weitere Umlenkrolle 11, über die das Tragseil um 90° nach unten in Richtung eines Gegengewichts 12 geführt wird. An dem Gegengewicht 12 wird das Tragseil 7 in Umlenkrollen 13 um 180° umgelenkt und zu einer letzten, fixen Rolle 14 wieder nach oben geführt.

Das Gegengewicht 12 ist über Stützrollen 12a seitlich gegen senkrechte Führungen 15 abgestützt. Es ist über die zuvor beschriebene Anordnung nach Art eines Flaschenzugs mit der Elektrode 4 verbunden, so dass ein bestimmter Hub eines der Gegengewichte 12 jeweils dem doppelten Hub der Elektrode entspricht.

Zumindest jeweils eine, insbesondere jede der Rollen 9, 11, 14 ist als eine Wiegezelle ausgebildet, um die Gewichtskräfte der Gegengewichte 12 und der Elektrode 4 bzw. deren Differenz zu bestimmen.

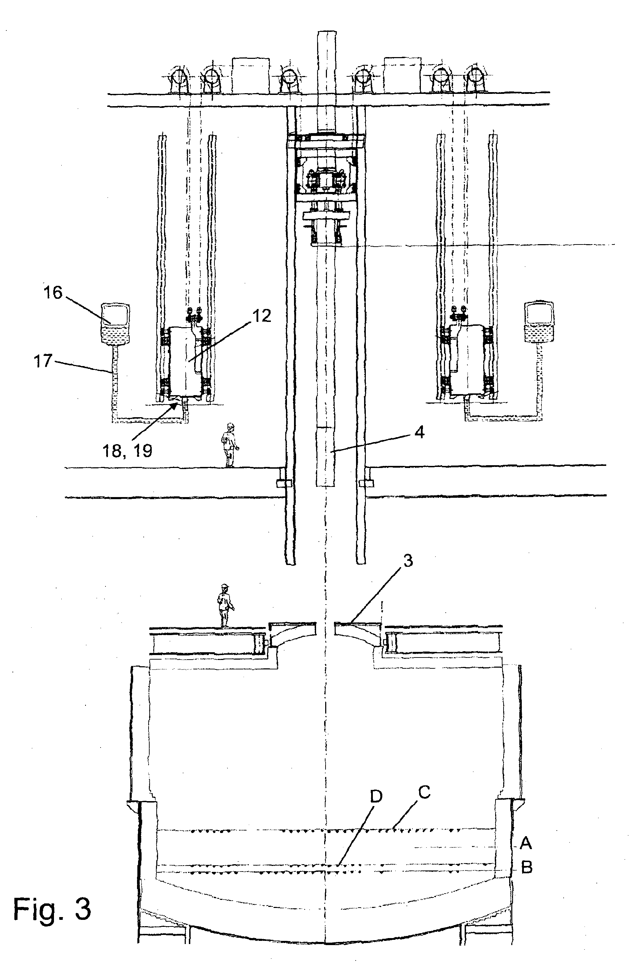

Falls diese Kräfte von vorbestimmten Sollwerten abweichen, können die Gegengewichte 12 durch Wasser als Gewichtsflüssigkeit verändert werden. Hierzu ist an jeder der Gegengewichtsanordnungen 12, 15 ein Drucktank 16 mit Wasser vorgesehen. Der Drucktank 16 ist über eine Leitung 17 mit einer automatischen Kupplung 18 verbunden, die in einer unteren Position des Gegengewichts 12 bzw. einer oberen Position der Elektrode 4 (siehe Fig. 3) mit einer Gegenkupplung 19 an dem Gegengewicht 12 verkoppelt. Die Gegenkupplung 19 ist in einem unteren Bereich des Gegengewichts 12 angeordnet. In dem Gegengewicht 12 ist ein Hohlraum vorgesehen, der über den Drucktank 16 im angekoppelten Zustand in definierter Menge mit Wasser als Gewichtsgut befüllt werden kann. Hierdurch können nach Installation einer neuen Elektrode und in Unterbrechungen des Elektrodenbetriebs die gewünschten Gewichtsverhältnisse von Elektrode 4 und Gegengewichten 12 bereitgestellt werden. Insbesondere können ein Abbrand oder eine sonstige Gewichtsveränderung der Elektrode zu regelmäßigen Zeitpunkten kompensiert werden.

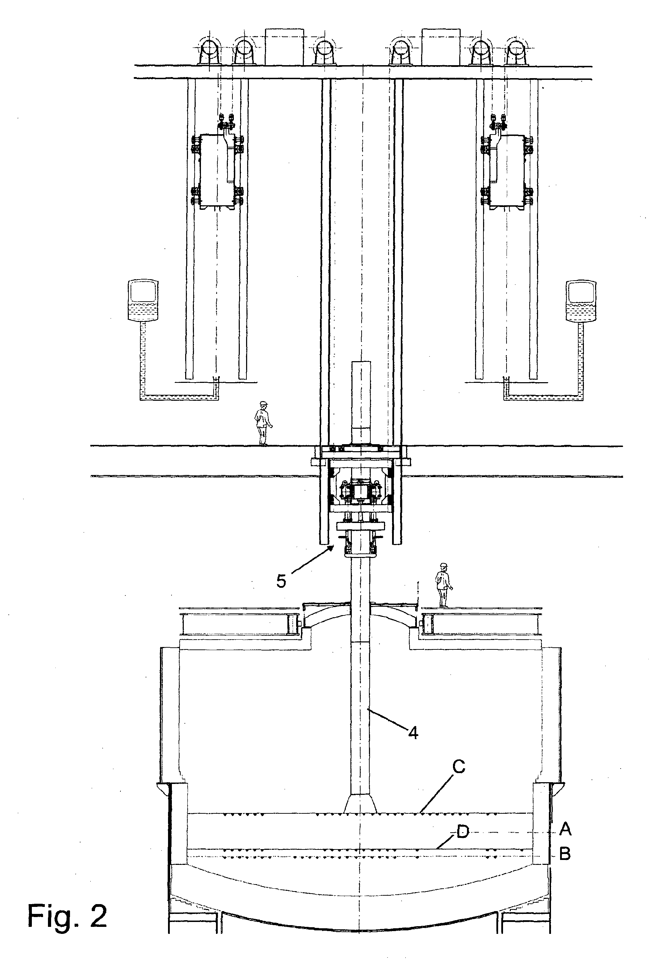

Fig. 1 und Fig. 2 zeigen jeweils eine maximal untere und eine maximal obere Arbeitsposition der Elektrode 4 bzw. des Halteglieds 5. Zwischen diesen Positionen liegt ein Hub des Arbeitsglieds um 1,8 m. In diesem Bereich kann die Elektrodenhöhe während des Betriebs in Abhängigkeit von der Abnutzung nachgefahren und mit hoher Geschwindigkeit geregelt werden, um den Lichtbogen konstant zu halten.

Fig. 3 zeigt eine maximal nach oben verfahrene Position des Haltglieds 5 bzw. der Elektrode 4, bei der kein Lichtbogen mehr betrieben wird. Der maximale Hub des Halteglieds 5 zwischen der untersten Position in Fig. 1 und der obersten Position in Fig. 3 beträgt 16 m.

In der Position nach Fig. 3 ist die Elektrode vollständig aus dem Deckelherz 3 ausgefahren, so dass dieses auf einfache Weise entnommen werden kann. Zudem sind die Kupplungen 19 der Gegengewichte an die Kupplungen 18 der Wassertanks 16 automatisch angeschlossen, so dass die Gegengewichte 12 durch Ablassen oder Befüllen mit Wasser verändert werden können.

Das Gefäß 1 hat eine Abstichöffnungen für die Schlacke auf einer Ebene A und eine Abstichöffnung für die Metallschmelze auf einer Ebene B. Im Betriebszustand nach Fig. 1 ist der Stand der Schlacke C mit der Ebene der Abstichöffnung identisch. In Fig. 2 liegt die Ebene der Schlacke C oberhalb der Abstichöffnung. In beiden Fällen (Fig. 1 und Fig. 2) liegt eine Ebene der Metallschmelze D oberhalb der Abstichöffnung für die Schmelze B.

In Fig. 3 liegen die Stände von Schlacke C und Schmelze D jeweils oberhalb ihrer Abstichöffnungen A, B.

Die vorstehend beschriebene Anordnung der Elektrode 4 ist insbesondere für Prozesse erste Wahl, in denen es auf eine schnelle Änderung der elektrischen Widerstände und somit des Elektrodenstroms ankommt. Dies ist vorrangig bei Fahrweisen der Fall, bei denen die Energie teilweise mit dem Widerstand eines Lichtbogens eingebracht wird. Da der Lichtbogen seiner Art nach etwas instabil ist, müssen entweder laufend die Elektrodenposition oder der Elektrodenstrom angepasst werden, um die eingebrachte Leistung konstant zu halten. Durch die vorliegende Anordnung kann entweder auf eine aufwändige Stromrichtertechnologie verzichtet werden (hier wird in erster Linie an Ferro-Nickel-SAF gedacht), oder die Steuerung kann durch die Möglichkeit sehr schneller Elektrodenpositionierung verbessert werden (z.B. FeCr - oder TiO₂ - DC-SAF).

## Patentansprüche

1. Vorrichtung zur Regulierung der Elektrode eines Elektro-Reduktionsofens, umfassend
eine senkrecht ausgerichtete Elektrode (4), die von oben in ein Gefäß (1) des Reduktionsofens einfahrbar ist,
wobei die Elektrode (4) über ein Tragseil (7) mit einem Gegengewicht (12) gehalten ist, und
wobei das Tragseil (7) über einen Elektromotor (10) antreibbar ist,
**dadurch gekennzeichnet,**
**dass** das Gegengewicht (12) in seiner Masse veränderbar ist.

2. Vorrichtung nach Anspruch 1, **dadurch gekennzeichnet, dass** die Masse des Gegengewichts (12) durch ein strömungsfähiges Gewichtsgut, insbesondere eine Flüssigkeit, veränderbar ist.

3. Vorrichtung nach Anspruch 2, **dadurch gekennzeichnet, dass** das Gegengewicht (12) über eine insbesondere automatische Kupplung (18, 19) an eine Befüllungseinrichtung (16, 17) für das Gewichtsgut lösbar anschließbar ist.

4. Vorrichtung nach einem der vorhergehenden Ansprüche, **dadurch gekennzeichnet, dass** die Elektrode (4) als selbsttragende Massivelektrode aus Kohlenstoff mit einem Durchmesser von mehr als 0,4 m, insbesondere mehr als 0,6 m, beträgt.

5. Vorrichtung nach einem der Ansprüche 1 bis 3, **dadurch gekennzeichnet, dass** die Elektrode (4) als Söderberg-Elektrode mit einem Durchmesser von mehr 0,7 m, insbesondere mehr als 1,0 m, ausgebildet ist.

6. Vorrichtung nach einem der vorhergehenden Ansprüche, **dadurch gekennzeichnet, dass** ein maximaler Verfahrhub der Elektrode (4) mittels des Tragseils (7) mehr als 10 m, insbesondere mehr als 12 m, beträgt.

7. Vorrichtung nach einem der vorhergehenden Ansprüche, **dadurch gekennzeichnet, dass** ein Deckelherz (3) des Reduktionsofens bei einer oberen Verfahrposition der am Tragseil (7) gehaltenen Elektrode (4) auswechselbar ist.

8. Vorrichtung nach einem der vorhergehenden Ansprüche, **dadurch gekennzeichnet, dass** der Elektromotor (10) mittels einer rechnergestützten Steuerung ansteuerbar ist.

9. Vorrichtung nach einem der vorhergehenden Ansprüche, **dadurch gekennzeichnet, dass** die Elektrode (4) mittels zumindest zwei Tragseilen (7) mit jeweils einem Gegengewicht (12) gehalten ist.

10. Vorrichtung nach einem der vorhergehenden Ansprüche, **dadurch gekennzeichnet, dass** das Tragseil (7) über zumindest eine Wiegezelle (9, 11, 14) geführt ist, um eine Gewichtsbelastung durch die Elektrode (4) zu messen.

## Claims

1. Device for regulating the electrode of an electric reduction furnace, comprising
a vertically oriented electrode (4) introducible from above into a vessel (1) of the reduction furnace,
wherein the electrode (4) is held by way of a support cable (7) with a counterweight (12) and
wherein the support cable (7) is drivable by way of an electric motor (10),
**characterised in that**
the counterweight (12) is variable in its mass.

2. Device according to claim 1, **characterised in that** the mass of the counterweight (12) is variable by a flowable weighting material, particularly a liquid.

3. Device according to claim 2, **characterised in that** the counterweight (12) is detachably connectible by way of a coupling (18, 19), which is, in particular, automatic, to a filling device (16, 17) for the weighting material.

4. Device according to any one of the preceding claims, **characterised in that** the electrode (4) is constructed as a self-supporting solid electrode of carbon with a diameter of more than 0.4 metres, particularly more than 0.6 metres.

5. Device according to any one of claims 1 to 3, **characterised in that** the electrode (4) is constructed as a Soderberg electrode with a diameter of more than 0.7 metres, particularly more than 1.0 metre.

6. Device according to any one of the preceding claims, **characterised in that** a maximum movement stroke of the electrode (4) by means of the support cable (7) is more than 10 metres, particularly more than 12 metres.

7. Device according to any one of the preceding claims, **characterised in that** a cover core (3) of the reduction furnace is exchangeable in an upper movement position of the electrode (4) held at the support cable (7).

8. Device according to any one of the preceding claims, **characterised in that** the electric motor (10) is activatable by a computer-assisted control.

9. Device according to any one of the preceding claims, **characterised in that** the electrode (4) is held by means of at least two support cables (7) each with a respective counterweight (12).

10. Device according to any one of the preceding claims, **characterised in that** the support cable (7) is guided by way of at least one weighing cell (9, 11, 14) in order to measure a weight loading by the electrode (4).

## Revendications

1. Dispositif pour la régulation de l'électrode d'un four d'électroréduction, comprenant une électrode (4) orientée en direction verticale, qui peut s'introduire à partir du haut dans une cuve (1) du four de réduction, l'électrode (4) étant maintenue via un câble porteur (7) comprenant un contrepoids (12), et dans lequel le câble porteur (7) peut être entraîné via un moteur électrique (10), **caractérisé en ce que** la masse du contrepoids (12) est variable.

2. Dispositif selon la revendication 1, **caractérisé en ce que** la masse du contrepoids (12) peut être modifiée via un matériau apte à l'écoulement procurant un poids, en particulier un liquide.

3. Dispositif selon la revendication 2, **caractérisé en ce que** le contrepoids (12) peut être raccordé de manière amovible via un couplage en particulier automatique (18, 19) à un mécanisme de remplissage (16, 17) pour le matériau procurant un poids

4. Dispositif selon l'une quelconque des revendications précédentes, **caractérisé en ce que** l'électrode (4) est réalisée sous la forme d'une électrode massive autoportante en carbone dont le diamètre est supérieur à 0,4 m, en particulier supérieur à 0,6 m.

5. Dispositif selon l'une quelconque des revendications 1 à 3, **caractérisé en ce que** l'électrode (4) est réalisé sous la forme d'une électrode de type Söderberg possédant un diamètre supérieur à 0,7 m, en particulier supérieur à 1,0 m.

6. Dispositif selon l'une quelconque des revendications précédentes, **caractérisé en ce que** la course maximale de l'électrode (4) au moyen du câble porteur (7) est supérieure à 10 m, en particulier supérieure à 12 m.

7. Dispositif selon l'une quelconque des revendications précédentes, **caractérisé en ce qu'**un couvercle de recouvrement central (3) du four de réduction peut être échangé dans une position de déplacement supérieur de l'électrode (4) maintenue contre le câble porteur (7).

8. Dispositif selon l'une quelconque des revendications précédentes, **caractérisé en ce que** le moteur électrique (10) peut être actionné au moyen d'une commande assistée par ordinateur.

9. Dispositif selon l'une quelconque des revendications précédentes, **caractérisé en ce que** l'électrode (4) est maintenue au moyen d'au moins deux câbles porteurs (7) comprenant chacun un contrepoids (12).

10. Dispositif selon l'une quelconque des revendications précédentes, **caractérisé en ce que** le câble porteur (7) est guidé via au moins une cellule de pesage (9, 11, 14), pour mesurer une charge pondérale à travers l'électrode (4).
